# EUROPÄISCHE PATENTSCHRIFT

(11) **EP 1 651 324 B1**
(45) Veröffentlichungstag und Bekanntmachung des Hinweises auf die Patenterteilung: **15.01.2014**
(21) Anmeldenummer: 04763533.9
(22) Anmeldetag: 27.07.2004
(51) Int. Cl.: B01D 21/01, C02F 1/52, C02F 103/00, C02F 103/42

(54) **AKALISCHES WÄSSRIGES FLOCKUNGSMITTEL, VERFAHREN ZUR HERSTELLUNG EINES ALKALISCHEN WÄSSRIGEN UND EINES FESTEN FLOCKUNGSMITTELS SOWIE DEREN VERWENDUNG.**
ALKALINE AQUEOUS FLOCCULATING AGENT, METHOD FOR THE PRODUCTION OF AN ALKALINE AQUEOUS AND A SOLID FLOCCULATING AGENT AND THEIR USE.
AGENT FLOCULANT ALCALIN AQUEUX, PROCÉDÉ DE PRODUCTION D'AGENTS FLOCULANTS ALCALIN AQUEUX ET SOLIDE ET LEUR UTILISATION

(30) Priorität: 29.07.2003 DE 10334521
(43) Veröffentlichungstag der Anmeldung: 03.05.2006
(73) Patentinhaber: P & W Invest Vermögensverwaltungsgesellschaft MbH, 5020 Salzburg (AT)
(72) Erfinder: POLAK, Walter, A-5020 Salzburg (AT); SCHWAIGER, Herbert, 4802 Ebensee (AT)
(74) Vertreter: Hagemann, Heinrich
(86) Internationale Anmeldenummer: PCT/EP2004/008400
(87) Internationale Veröffentlichungsnummer: WO 2005/011837

(56) Entgegenhaltungen:
- EP-A- 0 070 365
- EP-A- 0 350 174
- EP-A2- 0 165 646
- AT-B- 324 967
- DE-A1- 4 330 934
- DE-C- 258 152
- DE-C- 403 263
- GB-A- 279 788
- GB-A- 979 274
- US-A- 2 241 641
- US-A- 2 241 641
- US-A- 4 035 259
- US-A- 5 296 151

## Beschreibung

Die Erfindung betrifft ein Verfahren zur Herstellung eines alkalischen wässrigen Flockungsmittels (A) und eines festen Flockungs- und Sedimentationsmittels (B), ein alkalisches wässriges Flockungsmittel (A) auf der Basis eines alkalischen wässrigen Extrakts von Salzton (Werklaist), dessen Verwendung zur Aufbereitung von Wasser sowie die Verwendung des festen Flockungs- und Sedimentationsmittels (B) zur Behandlung von Teichwasser.

Neben künstlich angelegten Schwimm- und Badebecken im öffentlichen sowie auch im privaten Bereich erfreuen sich sogenannte "künstlich" angelegte Schwimm- und Badeteiche sowie auch "Biotope" immer größerer Beliebtheit. Das größte Problem dieser künstlich angelegten Teiche und Biotope liegt darin, daß es im Laufe der Zeit zu einer Veränderung des Erscheinungsbildes hinsichtlich des Wassers.kommt. Dies kann auch nach mehreren Jahren auftreten. Wenn das ökologische System in Ordnung ist, ist das Wasser meistens schön und klar. Dem Teichliebhaber sind in der Regel die ökologischen, chemischen, physikalischen und biologischen bzw. mikrobiologischen Vorgänge und Zusammenhänge nicht bewußt, so daß vielfach die fälschliche Meinung vorherrscht, daß ein künstlich angelegter Teich mit einem natürlichen Gewässer genau vergleichbar ist. Wie die Beobachtungen in der Praxis und ausreichende Untersuchungen bewiesen haben, läßt sich ein natürliches ökologisches System nicht 1:1 auf einen künstlich angelegten Teich übertragen. Die Hauptproblematik ist die "Wiederbelebung und Remobilisierung" organischer und anorganischer Stoffe, die aufgrund der geringen Tiefe in den Kleinbadeteichen erfolgt. Natürliche Gewässer haben üblicherweise eine größere Tiefe und es kommt dadurch nicht so leicht zu einer Wiederbelebung der besagten Stoffe, welche als Biomasse und Sedimente in größerer. Tiefe abgelagert ist. Unabhängig von klarem, ästhetischem Wasser mit ausreichender Sichttiefe dürfen die hygienischen Verhältnisse keinesfalls unbeachtet bleiben. Da in der Regel bei einem solchen Schwimmteich im Vergleich zu einem natürlichen Gewässer oder See das Wasservolumen bzw. die zur Verfügung gestellte Wassermenge für einen einzelnen Badegast wesentlich geringer ist - auch vielfach ein zu geringer Frischwasserzusatz erfolgt - sind auch mikrobiologische Probleme nie ganz auszuschließen.

Im Vergleich zu einem künstlich angelegten Freischwimmbecken, bei dem man die Wasserqualität durch Flockung, Filtration und Desinfektionsmittelbeigabe mit einfachen Messungen und bekannten Parametern mit hoher Genauigkeit steuern kann, so daß vom Beckenwasser aus keine Infektionsrisiken für den Besucher bestehen, ist dies ist bei einem künstlich angelegten Schwimmteich nicht der Fall. Hier wird es auf Dauer nur möglich und sinnvoll sein, mit Hilfe technischer Einrichtungen, die Wasserpflege - im konkreten Fall den Biokreislauf - zu unterstützen. Nachdem klassische oxidativ wirkende Wasser-desinfektionsmittel, die im Schwimmbad eingesetzt werden, wie z.B. Chlor oder Chlor/Chlordioxid sowie andere bekannte Desinfektionsmittel für Wasser, hier ausscheiden, sollte zumindest eine Flockenfiltration stattfinden bzw. die Möglichkeit einer Absaugung von am Boden befindlichen Sedimenten und Ablagerungen bestehen.

### Zum weitergehenden Stand der Technik:

Die EP 0 070 365 A1 offenbart ein Verfahren zur Herstellung eines flüssigen Mittels zur Verbesserung der Qualität verunreinigten Wassers, insbesondere von Wasser natürlicher Gewässer, Bäder und Abwässer. Hierzu wird eine wässrige Lösung einer anorganischen Base bereitgestellt, wobei deren pH-Wert über 12 liegen soll. Man trägt zerkleinertes Haselgebirge oder eine Mischung von Haselgebirge mit Werklaist oder allein Werklaist in die wässrige Lösung der anorganischen Base ein. Es wird 2 bis 5 Stunden lang gerührt. Der pH-Wert der derartig erhaltenen Lösung wird durch Säure- oder Laugenzusatz auf einen Wert eingestellt, der zwischen 7,5 und 10,5 liegen kann. Die Lösung wird von den ungelösten Bestandteilen nach ihrem Absetzen abgetrennt. Die anfallende alkalische wässrige Lösung zeigt Flockungseigenschaften.

Die AT 324 967 B bezieht sich auf ein Mittel zum Reinigen von verschmutztem Wasser auf Basis einer alkalischen, wässrigen Lösung bzw. Aufschlämmung anorganischer Salze, die, bezogen auf Wasser, 10 bis 20 Gew.-% Silikate, berechnet als SiO₂, 8 bis 16 Gew.-% oxidische oder hydroxidische Eisen- und/oder Aluminiumverbindungen, berechnet als Al₂O₃ bzw. Fe₂O₃, 6 bis 10 Gew.-% Calcium, berechnet als Calciumoxid, und 4 bis 10 Gew.-% Kalium, berechnet als Kaliumoxid, enthält. Der pH-Wert liegt zwischen 8 und 14. Dieses bekannte Mittel wird u.a. zur Klärung verunreinigten Teichwassers benutzt.

Die US 2 241 641 A offenbart eine Natriumchlorid, Aluminate und Silikate enthaltende feste Zusammensetzung zur Klärung trüben Wassers. Sie wird dem zu behandelnden trüben Wasser zusammen mit Kalk hinzugefügt. Das Gemisch wird gerührt. Entstehende Flocken entfernen Verunreinigungen aus dem Wasser.

Die US 4 035 259 A beschreibt ein Verfahren zur Herstellung einer sauren flüssigen Flockungszusammensetzung durch die Behandlung eines mit Wasser aufgeschlämmten Tons bei erhöhter Temperatur in einer Säure. Bei der Säure kann es sich um Salzsäure handeln. Der feste Rückstand wird abfiltriert. Der pH-Wert der erhaltenen Flockungszusammensetzung wird nicht angesprochen, des Weiteren nicht auf Salzton als zu benutzenden Ton. Die nach diesem Verfahren erhaltene Flockungszusammensetzung wird zur Wasserbehandlung herangezogen, wobei es eine hohe Koagulierungs- und Klärungskraft zeigt.

Die DE 258 152 C beschreibt die Verwendung eines Tonschlamms zur Wasserbehandlung. Dieser wird dadurch erhalten, indem Ton mit Säure und Wasser behandelt wird. Die Säure und das Wasser werden dem vorher unter Luftabschluss geglühten Ton in einer derartigen Menge zugesetzt, dass ein Ausfallen und damit ein Unlöslichwerden der Kieselsäure verhindert wird. Es tritt Selbsterhitzen auf eine Temperatur von 80°C bis 100°C ein. Die Flüssigkeit wird von dem sandigen Bodensatz abgegossen und darauf filtriert. Es verbleibt ein Kieselsäure-haltiger Schlamm als Filtrationsrückstand, während Aluminiumsulfat, Eisensulfat usw., soweit sie durch Wasser in Lösung gegangen sind, durch das Filter hindurchtreten. Der Kieselsäureschlamm wird zur Reinigung von Wasser benutzt. Er soll eine außerordentlich hohe Reinigungswirkung zeigen und zur Reinigung von Abwässern jeder Art verwendbar sein. Hier ist das Wasserreinigungsmittel der angesprochene Schlamm, der der Rückstand des Filterns ist. Eine Verwendung der abgetrennten Flüssigkeit zur Wasserbehandlung wird nicht erwähnt.

Aufgabe der Erfindung ist es daher, ein Mittel vorzuschlagen, welches als spezielles Flockungs- und Flocculationsmittel für die Flockungsstufe in einem Schwimmbadkreislauf eingesetzt werden kann und Eigenschaften besitzt, um es, ohne die Flora und Fauna zu belasten (keine Schäden an der Biozönose), für die Wasserbehandlung in einem künstlich angelegten Schwimm- und Badeteich oder Biotop einsetzen zu können, dies sowohl als Mittel zur Flockenfiltration mit flockenden, adsorptiven und fällenden Eigenschaften - als auch für die Sedimentation. Da sich am Markt befindliche organische oder auch anorganische Flockungs- und Flockungshilfsmittel aufgrund ihrer Eigenschaften und Bildung von unerwünschten Reaktionsprodukten etc. für einen breiten Einsatz nicht eignen, war es auch Aufgabe der Erfindung, einen Stoff bereitzustellen, der unbeschränkt im Schwimm- und Badebeckenwasser künstlicher Beckenanlagen sowie auch in Freigewässern, wie künstlich angelegten Schwimmteichen und Biotopen, unproblematisch und gefahrlos eingesetzt werden kann. Ferner ist Aufgabe der Erfindung die Entwicklung eines Mittels aus möglichst einem Naturprodukt, das ohne schädliche Nebenwirkung in Badeteichen und Wasser-Biotopen eingesetzt werden kann.

Die obige Aufgabe wird unter anderem gelöst durch ein erfindungsgemäßes alkalisches Flockungsmittel (A) auf der Basis eines alkalischen wässrigen Extraktes von Salzton (Werklaist), mit einem Gehalt an gelösten Silikaten und Aluminaten sowie an Alkalichlorid, wobei auf 1 Gewichtsteil Aluminat, ausgedrückt als Al(OH)₃ 1.) 2 bis 3 Gew.-Teile Silikat, ausgedrückt als SiO₂, sowie 2.) mindestens 10 Gew.-Teile Alkalichloride, insbesondere mindestens 20 Gew.-Teile Alkalichloride, entfallen.

Ferner betrifft die Erfindung ein festes Flockungs- und Sedimentationsmittel in Form eines sauer- und alkalisch extrahierten Salztons, vorzugsweise in feinstverteilter Form. Dieses Flockungs- und Sedimentationsmittel wird nachfolgend, um die Unterscheidung zum Flockungsmittel (A) zu erleichtern, als Flockungs- und Sedimentationsmittel (B) angegeben.

Die beiden obenbezeichneten Flockungsmittel (A) und (B) zeigen folgende vorteilhafte Ausgestaltungen: Das alkalische wässrige Flockungsmittel (A) ist insbesondere dadurch gekennzeichnet, dass die Alkalichloride in Form von Natriumchlorid und/oder Kaliumchlorid vorliegen. Besonders bevorzugt ist es, wenn auf ein Gew.-Teil Aluminat mindestens 30 Gew.-Teile, insbesondere 40 bis 60 Gew.-Teile Alkalichlorid entfallen. Die angegebene untere vorteilhafte Grenze von 30 Gew.-Teilen bedeutet, dass zur Ausbildung stabiler gutfiltrierbarer Flocken und damit einer guten Reinigungsleistung auch die Alkalichloride einen wesentlichen Beitrag leisten, wobei jedoch ein oberer und unterer Grenzwert vorzugsweise nicht überschritten werden sollte.

In dem Bereich von 40 bis 60 Gew.-Teilen Alkalichlorid werden die besonders vorteilhafte Ergebnisse eingestellt, die sich darin erweisen, dass die Ladung der im Wasser befindlichen kolloidalen Verunreinigungen so beeinflusst wird, dass sich diese Mikroteilchen zu größeren Agglomeraten zusammenballen und so leichter sedimentierbar bzw. filtrierbar sind.

Das alkalische wässrige Flockungsmittel (A) ist insbesondere dadurch gekennzeichnet, dass dessen pH-Wert über 9, insbesondere über 11 liegt. Hierzu ist auf folgendes hinzuweisen:

Die Löslichkeit der Kieselsäure und auch des Aluminats ist von der Alkalität bzw. vom pH-Wert abhängig, so dass es vorteilhaft ist, im Produkt einen pH-Wert einzustellen, der möglichst über 11 liegt. Bei der Eindosierung des Flockungsmittels in das zu behandelnde Wasser kommt es zu einer raschen Absenkung des pH-Wertes auf weniger als 9 und dadurch zu der gewünschten spontanen Reaktion und Ausflockung der Kieselsäure und des Aluminates, was wiederum zu der notwendigen Agglomeration der kolloidalen Wasserverunreinigungen führt.

Die Einhaltung des besonders bevorzugten pH-Wert-Bereichs von 12 bis 14 führt dazu, dass die zugrunde gelegte Aufgabe besonders vorteilhaft gelöst wird.

Grundsätzlich unterliegt die Erfindung bezüglich des Einsatzes des zu extrahierenden Salztons keiner wesentlichen Beschränkung. Zur Herstellung der Flockungsmittel kann sowohl der Graue, Grüne, Rote und/oder Schwarze Salzton herangezogen werden, wobei jedoch dem leichter aufschließbaren Grünen Salzton der Vorzug zu geben ist. Auf diese Ausgangsmaterialien wird später noch detailliert eingegangen. Der besondere Vorteil des erfindungsgemäßen Flockungsmittelsmittels (A) ist insbesondere darin zu sehen, dass es sich im Allgemeinen um eine klare, farb- und geruchlose und nicht-toxische Lösung handelt.

Das die Feststoffe in Form von suspendierten Tonteilchen enthaltende Flockungsmittel- und Sedimentationsmittel (B), das ebenfalls durch eine saure- und alkalische Extraktion von Salzton hergestellt wird, weist dann besondere Vorteile auf, wenn die durchschnittliche Teilchengröße der Feststoffe kleiner als 50 µm, insbesondere kleiner als 20 µm ist. Werden diese Werte noch unterschritten, dann bedeutet dies eine sehr große spezifische Oberfläche der Tonteilchen, wodurch die flockenbildende Wirkung verstärkt und das Sedimentationsverhalten der Wasserverunreinigungen positiv beeinflusst wird.

Ganz besonders bevorzugt ist es, wenn die durchschnittliche Teilchengröße kleiner als 10 µm ist und insbesondere 30 % der Teilchen eine Teffchengröße von weniger als 3 µm haben. Hierdurch wird die Flockungs- und Reinigungsleistung besonders positiv beeinflusst.

Auch das erfindungsgemäße Flockungs- und Sedimentationsmittel (B) geht vorzugsweise auf Grauen Salzton, Grünen Salzton, Roten Salzton und/oder Schwarzen Salzton zurück, insbesondere auf Grünen Salzton.

Die Erfindung, die sich vorstehend in zwei besonderen Flockungsmitteln darstellt, soll nachfolgend noch näher erläutert werden:

Viele Beobachtungen haben gezeigt, daß Wässer bzw. Salzlösungen, die mit Werklaist (= Salzton) behandelt wurden, oder in Kontakt waren, nach dem Absetzen (Sedimentation) des Salztones eine außerordentliche, brillante Klarheit aufweisen. Diese Beobachtungen führten zu der Überlegung, aus Werklaist ein für die Wasseraufbereitung in Schwimmbecken bzw. ein zur Verbesserung der Wasserqualität in Badeteichen geeignetes Produkt zu entwickeln. Werklaist ist ein Produkt, das im alpinen Salzbergbau bei der Herstellung der Rohsole anfällt Der Werklaist stammt also aus dem Haselgebirge. Darunter versteht man eine spezielle Gesteinsausbildung innerhalb des alpinen Salinares. Die alpinen Salzlager enthalten nur zum geringen Teil massives Steinsalz, überwiegend hingegen ein Haselgebirge. Dies ist ein durch Gebirgsbewegungen entstandenes Mischgestein, das in einer Grundmasse von feinkörnig bis grießigem Steinsalz vornehmlich Salzton, aber auch verschiedene "Einsprenglinge", wie Anhydrit, Polyhalit, Murazit, Sandstein und eine Reihe anderer Mineralien enthält. Durch den Faltungsdruck wurden die schmalen Salz-, Ton und Anhydritlager zerbrochen und fließtektonisch zu Haselgebirge vermischt. Der Steinsalzgehalt im Haselgebirge liegt zwischen 10 und 70 %. Zur Sole- und Salzgewinnung muß man sich des sogenannten "Nassen Abbaues" bedienen. In den Werkern und Bohrlochsonden reichert sich die Sole mit Natriumchlorid an (25 - 26 %), während die unlöslichen Teile als Werklaist zu Boden sinken. Salztone sind eine Gruppe von Tonminerallen, entstanden durch einen intensiven Stoffaustausch zwischen den "Verunreinigungen" und dem Salzgestein. Das ist erkennbar durch die nachweisbare authigene Neubildung von Quarz, Kalifeldspat, Talk und den Tonmineralien der Chloritgruppe. Eine röntgengraphische Untersuchung der Salztone ergab pelitische Glimmertone, mit den Hauptbestandteilen Illit, Chlorit, Muskovit, Vermiculit und bedingt durch die Bildung im Meerwasser Mixed-Layer-Minerale verschiedenster Zusammensetzung. Kombinationen wie Chlorit/Montmorrillonit, Illit/Chlorit treten häufig auf. Illite und Muskovit stellen einen Hauptbestandteil der Salztone dar. Die geochemische Sonderstellung der Salztone beruht auf deren relativ hohen MgO-Gehalt und dem Vorherrschen der Magnesium-Silikate. In den ostalpinen Salzlagerstätten lassen sich viele Mineralien nachweisen, man unterscheidet chemische Präzipitatsgesteine (Steinsalz und Begleitsalze), klastische Begleitgesteine(Tone und Sandsteine), semisalinare Mineralien und Spurenelemente (Glauberit, Vanthoffit, Astrakanit, Simonyt, Löweit, Glaserit, Langbeinit, Leonit, Schönit, Polyhalit uam.) Je nach der vorherrschenden Tonkomponente lassen sich mehrere Haselgebirgsarten unterscheiden, nämlich Schwarzes, Grünes, Graues oder Buntes (Rotes) Haselgebirge bzw. auch Mischungen dieser Hauptarten. Man findet aber auch Anhydrithaselgebirge, hier ist die Steinsalzgrundmasse durch Anhydrit oder Gips ersetzt.

Nachfolgend sollen die Bildungsvorgänge im Zusammenhang mit den verschiedenen Gebirgen aus dem bezeichneten Salztonarten beschrieben werden: Das Rotsalzgebirge ist das Ergebnis einer ruhigen, wenig unterbrochenen Sedimentation in tiefer eingesenkten Wannen, ohne ständigen Frischwasserzulauf. Das Grüntongebirge ist in küstennahen Gebieten entstanden und enthält keine Anhydrit und Polyhalit-Einschlüsse. Das Grausalzgebirge ist unter reduzierenden Bedingungen als salinare Rand- und Schwellenfazies entstanden, enthält Anhydritschutt und ist durchsetzt mit mächtigen stinkdolomitschen Anhydritbänken. Das Bunte Salztongebirge enthält alle klastischen und sulfatischen Komponenten der übrigen Salzgebirgsarten und ist durch Sedimentation von wieder aufgelöstem Salzgebirge entstanden. Durch die Entdeckung der reichen Sporenführungen im Salzgestein ist es möglich, genauere Angaben über die Entstehung der alpinen Salzlager zu machen. Die Salzlagerstätten wurden demnach im Zeitraum des Oberperms (Zechstein) und Oberskyth gebildet. In der oberpermischen Phase wurde das Rotsalz- und Grünsalz- im Oberskyth das Grausalzgebirge gebildet.

Nachfolgend sollen weitere Einzelheiten zu den angesprochenen Salztonarten angegeben werden.

Grauer Salzton: Frisch dunkelgrau, grubenfeucht hellgrau, dünnblättrig, weich. Fühlt sich seifig an, färbt weiß ab und liefert einen schwer durchlässigen Laist. In reiner Ausbildung selten, meist als Übergangsform zum Grünen Salzton. Vorkommen: Hall in Tirol, Hallein, Hallstatt. Grüner Salzton: Im frischen Abbruch dunkelgrau, grubenfeucht grünlichgrau, mit rostgelbem Beschlag auf den Ablöseflächen, sehr dicht, hart, flachmuschelig brechend, zuweilen sandig. Liefert einen mittelschwer durchlässigen Laist. Vorkommen: Hall in Tirol, Hallein und Hallstatt, nicht in Bad Ischl und Altaussee. Roter Salzton: Rotbraun bis violettbraun, sonst entweder mehr dem Grünen oder Schwarzen Salzton ähnlich, von oxydisch teilweise oder ganz verfärbten Stücken ist dieser Ton äußerlich nicht zu unterscheiden. Vorkommen: Hall in Tirol, ganz selten, in den übrigen Salzbergbauen untergeordnet vorhanden. Schwarzer Salzton: Frisch dunkelgrau, grubenfeucht schwarz, am Tageslicht ausbleichend, in trockener Luft oft ausblühend (Haarsalz). Feingeschichtet oder gebändert, plattig bis eckig brechend, weicher als grüner Salzton. Häufig in Verbindung bzw. im Übergang zum grauen Anhydrit (anhydritischer schwarzer Salzton). Liefert einen gut durchlässigen Laist. Vorkommen: Altaussee und Ischl, Hallstatt und Hallein an zweiter Stelle, in Hall nur untergeordnet.

Aus der nachfolgenden Tabelle gehen die mittleren chemischen Zusammensetzungen der angesprochenen alpinen Salztone (Hauptbestandteile) hervor:

| | | Schwarzer | Grüner | Grauer | Roter |
|---|---|---|---|---|---|
| | | SALZTON | | | |
| Spez. Gewicht | | 2,74 | 2,78 | 2,81 | 2,74 |
| SiO₂ | [%] | 44,82 | 51,00 | 52,30 | 49,05 |
| Al₂O₃ | [%] | 17,78 | 21,20 | 21,10 | 21,15 |
| MgO + CaO | [%] | 14,07 | 9,90 | 10,31 | 9,14 |
| K₂O + Na₂O | [%] | 4,72 | 4,07 | 4,16 | 4,65 |
| Fe₂O₃ + FeO | [%] | 6,46 | 7,00 | 5,66 | 11,20 |

Im Chemismus der Salztone bestehen keine wesentlichen Unterschiede. Der Graue Salzton hat einen höheren Kieselsäure- und Tonerde-Gehalt und der Rote Salzton einen höheren Gehalt an Eisenverbindungen (Hämatit tritt nur im roten Salzton auf). Röntgehdiffraktometrische Untersuchungen zeigten vor allem folgende Mineralien: Tonminerale: Illit/Muskovit 70 - 93 %, Chlorit 5 - 25 %, Montmorillonit und andere 2 - 6 % (andere Minerale: Halit, Quarz, Feldspat, Magnesit, Anhydrit). Dreischichtminerale, wie Illit, Montmorrillonit, Chlorit, und Vermiculit haben grundsätzlich den gleichen Aufbau. Ist als Zwischenschicht Ion Kalium eingebaut, entsteht Illit, bei der Adsorption von MgAl(OH)₂ entsteht Chlorit, bei einer Einlagerung von Ca, Mg, Na entsteht Montmorrillonit und Vermiculit.

Das ausgelaugte Haselgebirge wird als Laist bezeichnet. Der Laist aus dem Grauen und Grünen Salzton ist wasserundurchlässig und kann viel Wasser aufnehmen. Die Verteilung und das Gefüge von Illit und Chlorit und die Korngrößenverteilung spielt dabei eine wesentliche Rolle. Der Anteil der Teilchen kleiner als 2 mµ liegt bei etwa 5 %. (Schlämmanalyse nach Wiegner). Die spezifische Oberfläche dieser Fraktion beträgt 20 000 cm²/g. Das Sedimentsvolumen von Laist aus Grünem Salzton beträgt im Mittel 2,3ml/g, die Wasseraufnahmekapazität etwa 0,85 g. Tonminerale besitzen ein Kationenaustauschvermögen, die austauschfähigen Kationen und reaktionsfähigen Anionen sitzen an der Oberfläche. Bei Aufnahme von Wasser oder beim Einbau hydratisierter Ionen weiten sich die Schichtgitterabstände je nach Struktur und aktiver Oberfläche auf. Diese Quellbarkeit ist, wenn auch sehr unterschiedlich, für Tonminerale typisch. Die Kristallbegrenzungsflächen werden dadurch negativ geladen und es erfolgt ein Austausch mit Ionen aus der die Teilchen umgebenden Lösung. Chlorit kann durch konzentrierte Salzsäure gelöst werden. Die Tonsubstanzen weisen einen amphoteren Charakter auf, starke Laugen zerstören das Kristallgitter. Silicium und Aluminium Ionen gehen in Lösung. Es bilden sich Silikate und Aluminate. Der Laist wird seit vielen Jahren in verschiedenen österr. Solebädern in Form von Packungen zur lokalen Behandlung vor allem bei Erkrankungen des rheumatischen Formenkreises eingesetzt.

Ein besonders geeignetes Verfahren zur Herstellung der vorstehend bezeichneten Flockungsmittel (A) und (B) umfasst folgende Maßnahmen: Aufschließen eines Salztons (Werklaist), insbesondere in Form des Grauen, Grünen, Roten und/oder Schwarzen Salztons, in einem sauren wässrigen Medium bei erhöhter Temperatur, wobei die anfallende saure wässrige Suspension einen pH-Wert < 1 aufweist, Einstellen der anfallenden sauren Dispersion mit Alkalilauge, insbesondere mit festem Ätznatron, auf einen pH-Wert > 12, Halten der alkalischen wässrigen Suspension für mindestens 2 Tage bei erhöhter Temperatur, Abtrennen des alkalischen wässrigen Flockungsmittels (A) als klare Lösung von dem festen Flockungs- und Sedimentationsmittel (B).

Der besondere Vorteil dieses Verfahrens ist es demzufolge, dass sowohl das erfindungsgemäße Flockungsmittel (A) als auch (B) in einem einzigen Verfahrensablauf durch einfache Abtrennung erhalten werden, wobei die Abtrennung vorzugsweise mittels Sedimentation erfolgt.

Der Aufschluss des Salztons in saurem Medium wird später noch eingehend erläutert. Grundsätzlich wird für den sauren Aufschluss konzentrierte technisch reine Salzsäure benützt.

Der Aufschluss erfolgt bei erhöhter Temperatur, insbesondere bei einer Temperatur von 50 bis 60°C Die anfallende saure Suspension weist einen pH-Wert von kleiner als 1 auf. Anschließend wird mit Alkalilauge, insbesondere mit festem Ätznatron, neutrailsiert und ein pH-Wert von mindestens 12, insbesondere 12 bis 14, eingestelit. Die alkalische Lösung wird mindestens zwei Tage lang bei erhöhter Temperatur, insbesondere zwischen 50 bis 60°C, vorzugsweise 70 bis 80°C, gehalten. Anschließend wird das alkalische wässrige Flockungsmittel als klare Lösung von dem festen Flockungs- und Sedimentationsmittel abgetrennt. Bevorzugt ist es, dass das feste Flockungs- oder Sedimentationsmittel auf einen suspendierten Gehalt an festen Tonsubstanzen von 6 bis 8 Gew.-% eingestellt wird. Die Einhaltung dieser Grenzen, die nach einer Absetzzeit von 2 Tagen, insbesondere 4 Tagen, erreicht werden, führt zu einer homogenen Suspension, in welcher sich auch nach längerem Lagerzeit die Feststoffe (Tonsubstanzen) nicht mehr absetzen. Für die Ausbringung wird diese Suspension entsprechend den Anwendungsvorschriften mit Wasser verdünnt.

Die Ausgangsmaterialien dieses besonders geeigneten Verfahrens zur Herstellung der erfindungsgemäßen Flockungsmittel (A) und (B) wurden vorstehend bereits eingehend erläutert, worauf verwiesen sei. Ergänzend sei noch darauf hingewiesen, dass nach vielen Versuchen festgestellt wurde, dass, was das Löse-Aufschlussverhalten betrifft, sich vor allem der aus dem Gründen Salzton entstehende Werklaist am besten zur Erzeugung des Flockungsmittels (A) und auch (B) eignet. Grundsätzlich sind auch andere Salztone (bzw. der Laist aus diesen Tonen), insbesondere die weiteren angesprochenen Salztone zur Herstellung von Mitteln zur Wasserverbesserung geeignet. Jedoch sind bei Einsatz dieser Stoffe längere Aufschlusszeiten, höhere Lösemittelkonzentrationen und Aufschlusstemperaturen notwendig.

Die erfindungsgemäßen Flockungsmittel (A) und (B) sind in vielfältigen Bereichen mit großem Vorteil anwendbar. So ist das alkalische wässrige Flockungsmittel (A) insbesondere zur Aufbereitung von Wasser in Schwimmbadanlagen allein oder in Verbindung mit einem aluminium- und/oder eisenhaltigen Flockungsmittel gemeinsam zur Flockenfiltration zudosiert, bei der Trinkwasser-, Industrie-, Grauwasser- und Abwasserbehandlung als spezielles Flockungs- und Fällungsmittel, bei der Feststoffabtrennung in Kläranlagen als Absorptions- und Sedimentations- und Filtrationshilfsmittel und zur Schadstoffreduzierung und zum Verschönern von Wasser in Schwimmtelchen, Teichen und Biotopen, wobei die Anwendung des Flockungsmittels insbesondere über Dosieranlagen erfolgt, mit Vorteil einsetzbar. Das erfindungsgemäße Flockungs- und Sedimentationsmittel (B) ist insbesondere geeignet zur Behandlung von Teichwasser, insbesondere von natürlichen und künstlich angelegten Teichen, Biotopen und Gewässern mit starker Eutrophierung bzw. verstärktem Algenwachstum und hoher Trübung, wobei das Mittel insbesondere auf die jeweilige Wasseroberfläche aufgebracht wird.

Weitere Einzelheiten zu besonders vorteihaften Ensatzbereichen: Das erfindungsgemäß hergestellte Flockungsmittel kann in allen Bereichen der Wasseraufbereitung, insbesondere auch bei der Trinkwasser-, Industrie-, Grauwasser- und Abwasserbehandlung bzw. Aufbereitung, als spezielles Flockungs- und Fällungsmittel sowie Absorptions- und Sedimentationsmittel verwendet werden, aber auch als Filtrationshilfsmittel bei der Feststoffabtrennung in Kläranlagen. Im Abwasserbereich wirkt es auf leicht lösliche organische Verbindugen sowie positiv geladene Kolloide. Vorzugsweise wird hier das Flockungsmittel (B) in den Schlammeinlauf - vor dem Belebungsbecken - zudosiert. Das Flockungsmittel (A) unterstützt bei der Trinkwasseraufbereitung die eingesetzten Flockungsmittel besonders bei sehr weichen oder auch alkalischen Rohwässern. Bei Grauwasser oder Wasser, welches im industriellen Bereich recycelt wird, finden sich weitere Einsatzbereiche der Stoffe. Bei der Teichwirtschaft und speziellen Anwendungen der Wasserbehandlung bzw. Wasseraufbereitung in Koi-Teichen bewähren sich die Substanzen ausgezeichnet, um die geforderte Wasserqualität für die Fische besser zu gewährleisten und die notwendigen Parameter einzuhalten.

Spezielle Produkteigenschaften: Bei Anwendung für Teichwasser: als zudosiertes Produkt kommt es zu einer Phosphatreduzierung (durch Phosphatfällung) mit der Auswirkung einer Verringerung des Algenwachstums und der mit übermäßigem Algenwachstum verbundenen Nachteile für die Wasserhygiene. Ferner kommt es zu einer Reduktion des KMnO₄-Verbrauchs des Teichwassers. Die Flockung von Mikroorganismen und organischen Belastungen in schwer lösliche Agglomerate wird ebenfalls ermöglicht. Durch die erwähnten Eigenschaften kommt es zu einer Verringerung der Sauerstoffzehrung und dadurch zu einer Unterstützung und Verbesserung des Bio-Kreislaufs. Die Wirksamkeit - und hier zeichnet sich das Produkt für die Teichwasserbehandlung besonders günstig aus - liegt in einem pH-Bereich von pH 6 bis pH 9,5. (Erfahrungsgemäß haben die Freigewässer im Vergleich zum "eingestellten" pH-Wert im Schwimmbadwasser, welcher sich zwischen pH 6,5 und pH 7,4 befindet, einen höheren pH-Wert, der auch zugelassenen pH-Werten im Trinkwasser bis zu pH 9,5 entsprechen kann.) Bei pH-Werten über 7,4 ist z.B. eine Flockung mit Aluminiumsalzen nicht mehr effektiv bzw. kommt es zu keiner Flockenbildung, so dass sich gelöstes Aluminium im Wasser anreichert, was unerwünscht ist. (Allein schon aus diesen Gründen scheiden anorganische Flockungsmittel auf Aluminiumbasis von vornherein aus.) Eisenhaltige Flockungsmittel könnten bei höheren pH-Bereichen eingesetzt werden, sind aber für die Teichwasserbehandlung aufgrund anderer Eigenschaften - in bezug auf Flora und Fauna - nicht sinnvoll. Beim erfindungsgemäß hergestellten Flockungsmittel sind diese negativen Eigenschaften für den Einsatz in natürlichen Gewässern bzw. Teichwasser nicht vorhanden. Das Flockungsmittel zeichnet sich auch besonders durch seine Umweltfreundlichkeit aus. Die durch Flockungs- und Fällungsreaktionen entstandenen Sedimente sind schwer löslich, so dass die "gebundenen" Stoffe und Schadstoffe nicht mehr unter normalen Umständen, wie sie in Schwimmteichen anzutreffen sind, "remobilisiert" werden. Erst im stark sauren Bereich pH<3 gehen die Sedimente in Lösung! Durch Phosphatfällung sowie gute Bindung und Einbindung der Substanzen werden unerwünschte Stoffe optimal aus dem Wasser bzw. Wasserkreislauf entfernt. Dadurch wird unerwünschte Algen- und Fäulnisbildung im Wasser besser unterbunden. Das Wasser ist rein und klar und hat eine geringe organische Belastung. Der Einsatz des Mittels (B) als Sedimentationsmittel bei sogenanntem "umgekippten" Wasser bewirkt, daß die Schweb- und Trübstoffe rasch gebunden werden und sedimentieren. Sie können problemlos vom Beckenboden abgesaugt werden. Auch nach längerem Verweilen der gebundenen Stoffe ist keine "Remobilisierung" erkennbar. Die mit einer Remobilisierung verbundenen Probleme auf die Teichwasserqualität und Optik bleiben aus. Auch bei Kleinbiotopen, die nicht zum Schwimmen geeignet sind, eignen sich die Stoffe hervorragend zur Unterstützung des Biokreislaufs und zur Wasserschönung. Bekannterweise ergeben sich in diesen Kleinbiotopen oft unerwünschte Trübungen, welche durch den Stoffwechsel der Algen bedingt sind. Mit einer periodischen Behandlung des Teichwassers läßt sich dies vermeiden. Beim erfindungsgemäß hergestellten Flockungsmittel handelt es sich um keinen Gefahrenstoff. Nachdem auch Mikroorganismen flockbar sind, kommt dem Produkt hinsichtlich der mikrobiologischen Verhältnisse im Teichwasser bedingt durch Bakterienflockung eine wesentliche Bedeutung zu, obwohl es kein Desinfektionsmittel ist, welches bei natürlichen Gewäsern nicht zum Einsatz kommen kann. Da die Rohstoffe des Flockungsmittels natürliche Materialien bzw. Mineralien (Urmeer-Substanzen) aus dem Haselgebirge sind, widerspricht es auch nicht den Vorstellungen der "Bioteichbauer" und Teichbesitzer - keine klassischen Chemikalien einzusetzen. Im Schwimmbadbereich bei der Flockenfiltration in Verbindung mit einem aluminium- und / oder eisenhaltigen Flockungsmittel werden 0,6-1,0 ml des erfindungsgemäß hergestellten Flockungsmittels pro m³ umgewälztes Wasser zudosiert. Je nach Belastung eines Schwimmteiches werden 2 bis 4ml/m³ umgewälztes Wasser mittels geeigneter Dosiertechnik zudosiert. Beim Einsatz als Sedimentationsmittel werden nach einer Anfangsdosierung von 60ml/m³ Teichwasser (vor der Wachstumsphase) in periodischen Abständen von ca. 4 Wochen (Zeitraum Mai - August) 30ml/m³ Teichwasser über die Teichoberfläche gesprüht. Als Schlußdosierung zum Saisonende - vorzugsweise im September - nochmals 30ml/m³ Teichwasser. Als Sedimentationsmittel bei bereits "umgefallenem" veralgtem Teichwasser kommt das Produkt in etwas veränderter Form mit zusätzlichem Feststoffgehalt (Tonmineralien) von 60 bis 100 ml/m³ Teichwasser zum Einsatz.

Die Erfindung soll nachfolgend anhand von Beispielen, Herstellungsbeispielen und auch Beispielen über Wirksamkeitstests, noch weitergehend erläutert werden:

### Beispiei 1 (Herstellung des Flockungsmittels (A)):

Ansatz von 100 Liter Konzentrat: Der Werklaist wird aus einem Sinkwerk entnommen, in dem Rohsole aus einem mit Grünen Salzton vermischten Haselgebirge gewonnen wird. Zur Entfernung grobkörniger, meist karbonatischer Einschlüsse werden 7,5 kg des grubenfeuchten Laists in 20 Liter Wasser aufgeschlämmt und durch ein Sieb mit 2 mm Maschenweite gepresst. Das Filtrat (die Suspension) wird in einen säure- und laugenbeständigen beheizbaren Aufschlusstank übergeführt, mit 20 kg konz. Salzsäure versetzt und 2 Tage bei 50 ° C gerührt (Aufschluss des Chlorites). Nun werden nach Zusatz von 20 Liter Wasser langsam und unter Messung des pH-Wertes 28 kg Ätznatron (NaOH) zudosiert. Bei der Zudosierung von Ätznatron kommt es zur Ausfällung von Magnesiumhydroxid, das bei rascher Anhebung des pH Wertes in äußerst voluminöser Form anfällt. Um eine leichter sedimentierbare Ausfällung zu bekommen, ist es sinnvoll, nach dem Erreichen eines pH-Wertes von 8 die Zugabe von Ätznatron für 2 Stunden zu unterbrechen. Nach dieser Zeit wird das restliche Ätznatron zudosiert. Anschließend wird die Suspension auf 100 I aufgefüllt und bei 80 bis 90°C fünf Tage gerührt. Nach dieser Zeit wird als Leitsubstanz der Gehalt an Silicium und Aluminium analytisch ermittelt.

Als Leitsubstanz enthält die filtrierte Lösung 15-17 g/l SiO₂ und 6-7 g/l Al(OH)₃. Die Suspension wird nach Abkühlung in einen Einstelltank übergeführt und nach Zusatz von 65 I Reinsole (Anhebung des NaCl-Gehaltes) und Wasser auf 1.000 ! verdünnt. Das Rührwerk wird nach einer Mischzeit von etwa 2 Stunden ausgeschaltet. Nach einer Sedimentationszeit von etwa 2 Tagen ist die nun glasklare Lösung (A) gebrauchsfertig und kann in die entsprechenden Gebinde abgefüllt und als Flockungshilfsmittel zur Schwimmbeckenwasser-Aufbereitung eingesetzt werden.

### Beispiel 2 (Herstellung des Flockungsmittels (B)):

Bei dem geschilderten Aufschlussprozess geht etwa die Hälfte des eingesetzten Laistes in Lösung. Der Rest sammelt sich am Behälterboden als Suspension mit 6 bis 8 % Feststoffen an, die aus extrem feinkörnigen Tonteilchen bestehen. Wie die Schlämmanalyse zeigt, beträgt der Anteil an Teilchen kleiner als 2 µm vor dem Aufschlussverfahren etwa 5 %, nach dem Aufschluss mehr als 30 %, was mit einer entsprechenden Erhöhung der spez. Oberfläche einhergeht. Nach Abfüllung in entsprechende Gebinde gelangt das Produkt als etwa 6-8 %ige Suspension zum Anwender und wird nach entsprechender Verdünnung laut Anwendungsvorschrift zur Behandlung von Teichwasser eingesetzt.

### Beispiel 3 (Wirksamkeitstest):

Wenn die Dichtedifferenz zwischen der flüssigen Phase und der festen Phase ein Minimum erreicht, bleiben die Teilchen in Schwebe. Die Feststoffe sedimentieren nicht und verursachen eine Trübung des Wassers. Die Sinkgeschwindigkeit hängt auch von der Form der Teilchen ab, die kugelig, würfelig oder plättchenförmig sein kann. Durch die speziellen Oberflächeneigenschaften der Salztonteilchen kommt es zur Anlagerung und adsorptiven Bindung von im Wasser schwebenden Trübstoffen und dadurch zu einem rascheren Absinken der Verunreinigungen. Nach Zuführung von Salztonteilchen zeigt sich eine deutliche Änderung des Sedimentations- und Filtrationsverhaltens, was auf eine Strukturveränderung bzw. auf eine Valenzänderung an den Grenzflächen und damit Änderung der Teilchenladungsverhältnisse zurückzuführen ist. Durch die adsorptiven Eigenschaften der Salztontelichen werden auch Schadstoffe entfernt bzw. Stoffe, die für das Wachstum von Algen notwendig sind, deutlich reduziert. So auch zum Beispiel das Phosphat, welches bei Sonneneinstrahlung optimale Bedingungen für die Photosynthese der Algen - mit einem Massenwachstum und den damit verbundenen Problemen - bilden kann.

Nachweis:
Messung der Wassertrübe vor und nach Zusatz von Flockungsmittel (A)
Analyse des PO4-Gehaltes vor und nach Zugabe von Flockungsmittel (A)
Analyse des KMnO4-Verbrauches vor und nach Zugabe von Flockungsmittel (A)

| | |
|---|---|
| Sichttiefe vor Behandlung des Wassers | 1,5 - 2 m |
| 7 Tage nach 2-maliger Behandlung mit Flockungsmittel (A) | 4 m |
| | |
| Gesamtphosphat vor Behandlung des Wassers | 42,3 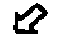 µg/l |
| 1 Tag nach Behandlung mit Flockungsmittel (A) | 23,3 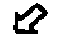 µg/l |
| 11 Tage nach Behandlung mit Flockungsmittel (A) | 14,3 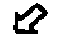 µg/l |

### Kaliumpermanganat-Verbrauch

| | |
|---|---|
| vor Behandlung des Wassers | 26,0 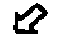 mg/l |
| 1 Tag nach Behandlung mit Flockungsmittel (A) | 24,0 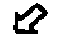 mg/l |
| 11 Tage nach Behandlung mit Flockungsmittel (A) | 17,7 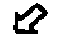 mg/l |

Labor- und auch Praxisversuche mit dem Flockungsmittels zeigten, daß auch Nitratgehalte um mindestens 1/3, in manchen Fällen noch mehr verringert werden konnten. Durch diese Versuche konnte eindeutig bestätigt werden, daß eine Gewässereutrophierung bedingt durch Phosphate und Nitrate stark herabgesetzt werden kann. Dadurch wird einem unerwünschten Algen- und zum Teil auch übermäßigen Pflanzenwachstum wirksam begegnet.

### Beispiel 4 (Herstellung des flockungsmittels (A) und (B)):

Das Verfahren zur Herstellung des Schwimmbad-Flockungsmittels (A) und des Teichwasser-Schönungsmittels (B) lässt sich insbesondere durch folgende Verfahrensmaßnahmen kennzeichnen:
- Verwendung von Werklaist, bevorzugt von Werklaist, der aus grünem Salzton entstanden ist!
- Aufschlämmung des Laistes im Verhältnis von 2,66 Teilen Wasser : 1 Teil Laist und Abtrennung der Grobanteile >2mm.
- Aufschluss des Chloritanteiles durch Zusatz von konz. Salzsäure im Verhältnis 1 Gew.teil Laistsuspension : 0,75 Gew.-Teile konz. HCl.
- Bei einer Temperatur von 50°C wird das Gemisch 48h gerührt.
- Zusatz von Ätznatron im Verhältnis 1 Gew.-Teil Gemisch : 0,6 Gew.-Teile Ätznatron
- 5 Tage Rührzeit bei 80-90°C
- Gehalt der Lösung 15-17 g/l Si02 und 6-7 g/l Al(OH)3
- Nach Abkühlen der Lösung wird diese im Gewichtsverhältnis 1:1 bevorzugt mit Reinsole vermischt (Reinsole Dichte 1,2kg/l, 300g/l NaCl) oder es wird eine entsprechende Menge Alkalichlorid zugesetzt.
- Nach Sedimentation des verbliebenen Feststoffes wird das klare Konzentrat abgezogen und im Verdünnungstank mit Wasser im Gewichtsverhältnis von 5,6 Teilen Wasser : 1 Teil Konzentrat vermischt.
- Die Lösung des Flockungsmittels (A) ist nun gebrauchsfähig und wird gemäß der angegebenen Dosiervorschrift als Hilfsmittel zur Verbesserung der Flocken-/ Flockungsfiltration dem Schwimmbeckenwasser-zugasetzt.
- Das Konzentrat des Flockungsmittels (A) kann aber auch direkt zum Versand gebracht werden und vor Ort - entsprechend der Anwendungsvorschrift - mit enthärtetem, Wasser verdünnt werden.

Nach dem Absetzen verbleibt eine Suspension, die etwa 6 - 8 % Feststoff enthält, der aus verschiedenen sehr feinkörnigen und reaktiven Tonmineralien besteht. Entsprechend den Anwendungsvorschriften wird dieses Produkt zur Schönung und Verbesserung der Wasserqualität in Badeteichen und Biotopen eingesetzt.

Das Flockungsmittel (A) wird mit einer Dosieranlage vor einer für die Flockenfiltration geeigneten Filtrationstechnik zudosiert. Flockungsmittel (A) wie auch das Flockungsmittel (B) können über die Teichoberfläche versprüht werden, um eine Sedimentation (absinken, absetzen) der koagulierten, adsorbierten und gefällten Stoffe zu erreichen. Das Flockungsmittel (A) für die Schwimmbadwasseraufbereitung wird in Verbindung mit einem aluminium- und/oder eisenhaltigen Flockungsmittel gemeinsam (Flocculations- und Flockungsmittel) zur Flockenfiltration zudosiert.

## Patentansprüche

1. Verfahren zur Herstellung eines alkalischen wässrigen Flockungsmittels (A) und eines festen Flockungs- und Sedimentationsmittels (B) nach folgenden Maßnahmen:
- Aufschließen eines Salztons (Werklaist) in einem sauren wässrigen Medium bei erhöhter Temperatur,
- wobei die anfallende saure wässrige Suspension einen pH-Wert < 1 aufweist,
- Einstellen der anfallenden sauren Dispersion mit Alkalilauge, insbesondere mit festem Ätznatron, auf einen pH-Wert > 12,
- Halten der alkalischen wässrigen Suspension für mindestens 2 Tage bei erhöhter Temperatur,
- Abtrennen des alkalischen wässrigen Flockungsmittels (A) als klare Lösung von dem festen Flockungs- und Sedimentationsmittel (B).

2. Verfahren nach Anspruch 1, **dadurch gekennzeichnet, dass** ein Salzton (Werklaist) in Form des Grauen, Grünen, Roten und/oder Schwarzen Salztons aufgeschlossen wird.

3. Verfahren nach Anspruch 1 oder 2, **dadurch gekennzeichnet, dass** in saurem Medium bei einer Temperatur von 50°C bis 60°C aufgeschlossen wird.

4. Verfahren nach einem der Ansprüche 1 bis 3, **dadurch gekennzeichnet, dass** die anfallende saure Suspension auf einen pH-Wert von 12 bis 14 eingestellt wird.

5. Verfahren nach einem der Ansprüche 1 bis 4, **dadurch gekennzeichnet, dass** die alkalische wässrige Suspension für mindestens vier Tage bei der erhöhten Temperatur gehalten wird.

6. Verfahren nach einem der Ansprüche 1 bis 4, **dadurch gekennzeichnet, dass** die alkalische wässrige Suspension für mindestens zwei Tage bei einer erhöhten Temperatur von 70 bis 80°C gehalten wird.

7. Verfahren nach einem der Ansprüche 1 bis 6, **dadurch gekennzeichnet, dass** das Abtrennen des alkalischen wässrigen Flockungsmittels (A) von dem festen Flockungs- und Sedimentationsmittel (B) durch Sedimentation erfolgt.

8. Alkalisches wässriges Flockungsmittel (A) auf der Basis eines alkalischen wässrigen Extraktes von Salzton (Werklaist), mit einem Gehalt an gelösten Silikaten und Aluminaten sowie an Alkalichlorid, wobei auf 1 Gewichtsteil Aluminat, ausgedrückt als Al(OH)₃ 1.) 2 bis 3 Gew.-Teile Silikat, ausgedrückt als SiO₂, sowie 2.) mindestens 10 Gew.-Teile Alkalichloride entfallen.

9. Alkalisches wässriges Flockungsmittel (A) nach Anspruch 8, **dadurch gekennzeichnet, dass** es auf einem alkalischen wässrigen Extrakt von Salzton (Werklaist) in Form von Grauem Salzton, Grünem Salzton, Rotem Salzton und/oder auf Schwarzem Salzton beruht.

10. Alkalisches wässriges Flockungsmittel nach Anspruch 8 oder 9, **dadurch gekennzeichnet, dass** auf 1 Gew.-Teil Aluminat mindestens 20 Gew.-Teile Alkalichloride entfallen.

11. Alkalisches wässriges Flockungsmittel nach einem der Ansprüche 8 bis 10, **dadurch gekennzeichnet, dass** auf 1 Gew.-Teil Aluminat mindestens etwa 30 Gew.-Teile Alkalichlorid entfallen.

12. Alkalisches wässriges Flockungsmittel nach Anspruch 11, **dadurch gekennzeichnet, dass** auf 1 Gewichtsteil Aluminat 40 bis 60 Gewichtsteile Alkalichlorid entfallen.

13. Alkalisches wässriges Flockungsmittel nach einem der Ansprüche 8 bis 12, **dadurch gekennzeichnet, dass** die Alkalichloride in Form von Natriumchlorid vorliegen.

14. Alkalisches wässriges Flockungsmittel nach einem der Ansprüche 8 bis 13, **dadurch gekennzeichnet, dass** sein pH-Wert zwischen 12 und 14 liegt.

15. Alkalisches wässriges Flockungsmittel nach wenigstens einem der Ansprüche 8 bis 14, **dadurch gekennzeichnet, dass** es eine klare, farb- und geruchlose und nicht-toxische Lösung darstellt.

16. Verwendung des alkalischen wässrigen Flockungsmittels (A) nach mindestens einem der Ansprüche 8 bis 15 zur Aufbereitung von Wasser
1) in Schwimmbadanlagen allein oder in Verbindung mit einem aluminium- und/oder eisenhaltigen Flockungsmittel gemeinsam zur Flockenfiltration zudosiert,
2) bei der Trinkwasser-, Industrie-, Grauwasser- und Abwasserbehandlung als spezielles Flockungs- und Fällungsmittel,
3) bei der Feststoffabtrennung in Kläranlagen als Absorptions- und Sedimentations- und Filtrationshilfsmittel und
4) zur Schadstoffreduzierung und zum Verschönern von Wasser in Schwimmteichen, Teichen und Biotopen, wobei die Anwendung des Flockungsmittels insbesondere über Dosieranlagen erfolgt.

17. Verfahren nach mindestens einem der Ansprüche 1 bis 7, **dadurch gekennzeichnet, dass** das anfallende feste Flockungs- und Sedimentationsmittel (B) zur Behandlung von Teichwasser herangezogen wird, wobei das Mittel insbesondere auf die jeweilige Wasseroberfläche aufgebracht wird.

18. Verfahren nach Anspruch 17, **dadurch gekennzeichnet, dass** das Flockungs- und Sedimentationsmittel (B) zur Behandlung von natürlichen und künstlich angelegten Teichen, Biotopen und Gewässern mit starker Eutrophierung bzw. verstärktem Algenwachstum und hoher Trübung herangezogen wird.

## Claims

1. A method for manufacture of an alkaline aqueous flocculating agent (A) and of a solid flocculating and sedimentation agent (B) comprising the following steps:
- a salt clay is broken down in an acid aqueous medium at increased temperature,
- resulting in an acid aqueous suspension of a pH-value of less than 1;
- adjusting the resulting acid dispersion with alkali lye, in particular with solid sodium hydroxide, to a pH-value of more than 12,
- keeping the alkaline aqueous suspension for a minimum of 2 days at increased temperature,
- separating the alkaline aqueous flocculating agent (A) as a clear solution from the solid flocculating and sedimentation agent (B).

2. The method according to claim 1, **characterized in that** a salt clay (Werklaist) as a grey salt clay, green salt clay, red salt clay and/or black salt clay is broken down.

3. The method according to claim 1 or 2, **characterized in that** it is broken down in an acidic medium at a temperature of 50°C to 60°C.

4. A method according to one of claims 2 to 3, **characterized in that** the resulting acid suspension is adjusted to a pH-value of 12 to 14.

5. A method according to one of claims 1 to 4, **characterized in that** the alkaline aqueous suspension is kept for at least 4 days at an increased temperature.

6. A method according to one of claims 1 to 4, **characterized in that** the aqueous suspension is kept for at least 2 days at an increased temperature of 7°C to 80°C.

7. A method according to one of claims 1 to 6, **characterized in that** the separation of the alkaline aqueous flocculating agent (A) from the solid flocculating and sedimentation agent (B) is carried out by sedimentation.

8. An alkaline aqueous flocculation agent (A) based on an alkaline aqueous extract of salt clay (Werklaist) with contents of dissolved silicates and aluminates as well as alkali chloride, whereby for 1 part by weight of aluminate, expressed as Al(OH₃), are provided 1.) 2 to 3 parts by weight of silicate (expressed as SiO₂), as well as 2.) at least 10 parts by weight of alkali chloride.

9. An alkaline aqueous flocculating agent (A) according to claim 8, **characterized in that** it is based on an alkaline aqueous extract of salt clay (Werklaist) as grey salt clay, green salt clay, red salt clay and/or black salt clay.

10. An alkaline aqueous flocculating agent according to claim 8 or 9, **characterized in that** 1 part by weight of aluminate are provided at least 20 parts by weight of alkali chloride.

11. An alkaline aqueous flocculating agent according to claim 8 to 10, **characterized in that** 1 part by weight of aluminate are provided at least 30 parts by weight of alkali chloride.

12. An alkaline aqueous flocculating agent according to claim 11, **characterized in that** for 1 part by weight of aluminate are provided 40 to 60 parts by weight of alkali chloride.

13. An alkaline aqueous flocculating agent according to one of claims 8 to 12, **characterized in that** the alkali chloride is sodium chloride.

14. An alkaline aqueous flocculating agent according to one of claims 8 to 13, **characterized in that** its pH-value is 12 to 14.

15. An alkaline aqueous flocculating agent according to at least one of claims 8 to 14, **characterized in that** it is a clear, colorless, odorless and non-toxic solution.

16. Use of an alkaline aqueous flocculating agent (A) according to at least one of claims 8 to 15 for the treatment of water
1) in swimming pool facilities alone or in combination with an aluminum- and/or iron-containing flocculating agent, dosed in jointly for flocculent filtration,
2) in drinking water-, industrial-, gray water- and waste water treatment as specific flocculating and precipitation agent,
3) in separation of solid matter in sewage treatment plants as absorption and sedimentation and filtration adjuvant, and
4) for reduction of harmful matter and for beautification of water in swimming ponds, ponds and biotopes, whereby application of the flocculating agent occurs especially by means of dosing systems.

17. Method according to at least one of claims 1 to 7, **characterized in that** the resulting solid flocculating and sedimentation agent (B) is used for the treatment of water in ponds, wherein the agent is especially applied to the respective water surface.

18. A method according to claim 17, **characterized in that** the flocculating and sedimentation agent (B) is used for the treatment of natural and artificially constructed ponds, biotopes and waters with vigorous plant growth (eutrophication) or algae growth and high cloudiness.

## Revendications

1. Procédé de fabrication d'un agent de floculation aqueux alcalin (A) et d'un agent de floculation et de sédimentation solide (B), comportant les étapes suivantes :
- dispersion d'une argile salifère (werklaist) dans un milieu aqueux acide à une haute température,
- la suspension aqueuse acide obtenue présentant un pH < 1,
- ajustement à un pH > 12 de la dispersion acide obtenue à l'aide d'une lessive alcaline, en particulier de soude caustique solide,
- maintien pendant au moins 2 jours de la suspension aqueuse alcaline à une haute température,
- séparation de l'agent de floculation aqueux alcalin (A), sous forme d'une solution limpide, d'avec l'agent de floculation et de sédimentation solide (B).

2. Procédé selon la revendication 1, **caractérisé en ce qu'**on disperse une argile salifère (werklaist) sous forme d'une argile salifère grise, verte, rouge et/ou noire.

3. Procédé selon la revendication 1 ou 2, **caractérisé en ce qu'**on procède à la dispersion en milieu acide à une température de 50 à 60°C.

4. Procédé selon l'une des revendications 1 à 3, **caractérisé en ce que** la suspension acide obtenue est ajustée à un pH de 12 à 14.

5. Procédé selon l'une des revendications 1 à 4, **caractérisé en ce que** la suspension aqueuse alcaline est maintenue pendant au moins quatre jours à la haute température.

6. Procédé selon l'une des revendications 1 à 4, **caractérisé en ce que** la suspension aqueuse alcaline est maintenue pendant au moins deux jours à une haute température de 70 à 80°C.

7. Procédé selon l'une des revendications 1 à 6, **caractérisé en ce que** la séparation de l'agent de floculation aqueux alcalin (A) d'avec l'agent de floculation et de sédimentation solide (B) a lieu par sédimentation.

8. Agent de floculation aqueux alcalin (A) à base d'un extrait aqueux alcalin d'argile salifère (werklaist) ayant une certaine teneur en silicates et aluminates dissous, ainsi qu'en un chlorure d'un métal alcalin, dans lequel, pour 1 partie en poids d'aluminate, exprimé en Al(OH)₃, on a 1.) 2 à 3 parties en poids de silicate, exprimé en SiO₃, ainsi que 2.) au moins 10 parties en poids de chlorures de métaux alcalins.

9. Agent de floculation aqueux alcalin (A) selon la revendication 8, **caractérisé en ce qu'**il se fonde sur un extrait aqueux alcalin d'argile salifère (Werklaist) sous forme d'argile salifère grise, d'argile salifère verte, d'argile salifère rouge et/ou d'argile salifère noire.

10. Agent de floculation aqueux alcalin selon la revendication 8 ou 9, **caractérisé en ce qu'**on a pour 1 partie en poids d'aluminate, au moins 20 parties en poids de chlorures de métaux alcalins.

11. Agent de floculation aqueux alcalin selon l'une des revendications 8 à 10, **caractérisé en ce qu'**on a pour 1 partie en poids d'aluminate au moins environ 30 parties en poids du chlorure d'un métal alcalin.

12. Agent de floculation aqueux alcalin selon la revendication 11, **caractérisé en ce qu'**on a pour 1 partie en poids d'aluminate 40 à 60 parties en poids du chlorure d'un métal alcalin.

13. Agent de floculation aqueux alcalin selon l'une des revendications 8 à 12, **caractérisé en ce que** les chlorures de métaux alcalins se présentent sous forme de chlorure de sodium.

14. Agent de floculation aqueux alcalin selon l'une des revendications 8 à 13, **caractérisé en ce que** son pH est compris entre 12 et 14.

15. Agent de floculation aqueux alcalin selon au moins l'une des revendications 8 à 14, **caractérisé en ce qu'**il représente une solution limpide, incolore et inodore, et non toxique.

16. Utilisation de l'agent de floculation aqueux alcalin (A) selon au moins l'une des revendications 8 à 15 pour le traitement de l'eau
1) dans des installations de piscine, à lui seul, ou, conjointement à un agent de floculation contenant de l'aluminium et/ou du fer, ajoutés ensemble pour la filtration des flocs,
2) pour le traitement de l'eau potable, de l'eau industrielle, de l'eau grise et des eaux résiduaires, en tant qu'agent spécial de floculation et de précipitation,
3) lors de la séparation des matières solides dans les installations de clarification, en tant qu'auxiliaires d'absorption et de sédimentation et de filtration, et
4) pour la réduction de la pollution et pour embellir les piscines naturelles, les étangs et les biotopes, l'utilisation de l'agent de floculation s'effectuant en particulier par l'intermédiaire de dispositifs doseurs.

17. Procédé selon au moins l'une des revendications 1 à 7, **caractérisé en ce que** l'agent de floculation et de sédimentation solide obtenu (B) est utilisé pour le traitement de l'eau des étangs, le produit étant appliqué en particulier sur la surface de l'eau.

18. Procédé selon la revendication 17, **caractérisé en ce que** l'agent de floculation et de sédimentation (B) est utilisé pour le traitement des étangs naturels et artificiels, des biotopes et des masses d'eau naturelle à forte eutrophisation ou à croissance renforcée des algues et à haute turbidité.
